# EUROPEAN PATENT SPECIFICATION

(11) **EP 4 228 966 B1**
(45) Date of publication and mention of the grant of the patent: **09.09.2026**
(21) Application number: 22823310.2
(22) Date of filing: 24.06.2022
(51) Int. Cl.: B64C 27/00, B64C 39/02, B64C 1/08, B64U 20/70, B64U 20/40, F16B 7/18, B64C 1/06, B64C 1/00

(54) **ALUMINUM SIGMA DRONE CHASSIS**
ALUMINIUM-SIGMA-DROHNENCHASSIS
CHÂSSIS DE DRONE SIGMA D'ALUMINIUM

(30) Priority: 31.12.2021 TR 202122169
(43) Date of publication of application: 23.08.2023
(73) Proprietor: ISTANBUL GELISIM ÜNIVERSITESI, Istanbul (TR)
(72) Inventor: UZ, Umut, Avcilar/Istanbul (TR); YILMAZ, Furkan, Avcilar/Istanbul (TR); ERDOGAN, Muhammet Ömer, Avcilar/Istanbul (TR)
(74) Representative: Tasçi, Abdurrahman
(86) International application number: PCT/TR2022/050648
(87) International publication number: WO 2023/128955

(56) References cited:
- CN-U- 201 963 746
- CN-U- 207 773 421
- CN-U- 207 956 051
- CN-U- 210 064 824
- CN-U- 211 844 919
- FR-A1- 2 908 178
- JP-B1- 6 868 317
- KR-B1- 102 036 842
- US-B1- 6 481 177
- US-B1- 6 712 543

## Description

### Technical Field:

This invention relates to a aluminum sigma drone chassis that can be used in drones capable of carrying people or cargo.

### State of the Art:

The chassis is the main support structure that carries all the other parts of the motor vehicle connected to it, such as the skeleton of an organism. Drones have a chassis that forms their skeleton. This chassis is a skeleton on which the drone and its parts are mounted.

The most common chassis types in current drones are X-type chassis and H-type chassis. These chassis types are usually made with carbon fiber, plastic or 3D printing. The most widely used is carbon fiber. Quality carbons are expensive. Chassis made of a mixture of carbon and other materials can also be at high prices according to the ratio of this mixture.

The patent application KR20210055263A describes the" Frame for Drone". The present invention relates to a frame for a drone, which comprises: a plurality of side frames having a main body coupled to a lower portion thereof and formed in a bent form to surround a portion of the side and upper surfaces of a fuel cell provided on an upper portion of the main body; an arm formed on an upper portion of the side frame and to which a rotor is coupled to an end thereof; and a fixed frame formed to connect upper ends of the side frames to each other. Accordingly, by distributing and supporting the load and pressure more efficiently, the stability of flight and the durability of the fuselage can be reinforced to prevent vibration caused by the rotation of the motor.

The above-mentioned patent application describes a chassis made of carbon on which the drone parts are mounted. Since no fastener is used in the fixing of the main body to the chassis, it does not have a solid structure. In addition, since the chassis is made of carbon material, the cost is high.

The patent application CN107618650A describes "3D printed drone frame and drone". The invention discloses a 3D-printed drone frame and a drone. The drone frame comprises four regular-hexagon rotor protecting arms and a rectangular reinforcing frame and is characterized in that connecting plates are arranged among the regular-hexagon rotor protecting arms, the four regular-hexagon rotor protecting arms are integrally connected with the connecting plates, and the rectangular reinforcing frame is arranged below the regular-hexagon rotor protecting arms. The drone comprises the drone frame, a flight control system, a battery, a GPS positioning module, aerial photographing equipment and propellers. The 3D-printed drone frame and the drone have the advantages that the 3D-printed drone frame is fast formed and manufactured through a 3D printing process, process flow is reduced, and the drone frame and the drone are simple and stable in structure, reasonable in design and layout, convenient to mount and demount, reasonable in drone-carried electric equipment layout, stable in signal transmission, safe and reliable.

A drone frame made with 3D printing is described in the patent application mentioned above. Making the frame with 3D printing is costly and not a durable enough product. In addition, production time and assembly take time.

The patent application TR2021013913 includes an unmanned aerial vehicle. This invention relates to unmanned aerial vehicles that operate more efficiently by connecting to the plant on the ground or in a vehicle and supplying compressed air from the relevant plants. Fuel and energy savings are achieved by providing energy transfer to the unmanned aerial vehicles during their flight, by using compressed air conveyed on the lines, efficiency in the system as a result of the lightness of the material carried on the lines, and additionally using compressed air during the flight of the vehicles, and also by feeding the battery with compressed air.

The chassis in the above-mentioned drone mechanism consists of a circular tube profile. Holes must be drilled on the surfaces of these circular pipe profiles for screwed/bolted installation of the chassis. Therefore, labor costs will increase, material losses and energy consumption will increase.

The utility model application CN210064824U discloses a novel elevator hidden type aluminum hoistway sectional material structure. The utility model discloses a novel elevator hidden type aluminum shaftway sectional material structure. The device comprises a plurality of upright posts and a plurality of crossbeams, the main bodyof the cross section of the upright post is an inverted L-shaped hollow connecting body I; first reserved cavities used for containing screw fixing plates are formed in the two ends of the first connecting body correspondingly. One side of each first reserved cavity is provided with a first sliding groove opening used for fixing a screw.

The patent application KR102036842 discloses joint for profile. The patent related to a joint for assembling a profile to assemble a profile. More specifically, the joint is an integrated joint, which passes through a coupling groove of a profile at a front end of a body part having a predetermined length and is formed with a holding part that can be held by rotation, and a hexagonal rotation part having an integrated washer formed in another front end of the body part is formed.

The patent applicaton US6481177 discloses inside corner connector for structural framing members. The connector is provided for structural framing members having T-slots running lengthwise along a major surface of the structural framing member. The connector includes a pair of guides, each guide being sized to fit within a T-slot of one of the framing members for linear movement.

The patent application FR2908178 discloses hollow sections e.g. vertical column and horizontal beam. The unit has two hollow sections made of plastic material such as PVC, and assembled together using a connection unit such as zamak part, and a clamping screw. The section has a longitudinal fork delimited by longitudinal detachments, and the section has a tenon cased in the fork. The detachments are positioned between the unit and the tenon.

The utility model application CN201963746 discloses bearing and bearing pedestal device. The utility model discloses a bearing and bearing pedestal device, comprising a bearing, a bearing pedestal and needle riveting points. The bearing is arranged in the bearing pedestal. The needle riveting points are on the bearing pedestal and the circles whose reservation radius is the distance of central axis of the bearing pedestal. The needle riveting points are ball-shaped scallops. The utility model adopts needle riveting points, therefore, the utility model reduces the stress concentration around the needle riveting points and avoids the breakage or crack of the bearing pedestal parts.

The patent application US6712543 discloses connecting device for profiled bars with grooves. The connecting device for connecting at least two profiled bars that are essentially perpendicular to one another and have grooves, in conjunction with sliding blocks, one plate connector unit is fastened to the end of a first profiled bar and anchored in a groove in the second profiled bar by way of screw units they extend in recesses in the plate connector unit. The geometry of the screw head of the screw unit is configured such that it centers the screw unit within the groove in the first profiled bar and the engages with a centering effect in the groove in the second profiled bar.

The patent application JP6868317 discloses frame assembly and method for manufacturing same. The frame assembly for unmanned aerial vehicle comprising: at least two parallel first frame members, a second frame member orthogonal to the first frame member, and a fixing member fixed to each of the first and second frame members.

Consequently, there is a need for a new technology that is inexpensive, structurally sound, easy to assemble and disassemble, which can overcome the disadvantages mentioned above.

### Description of the Invention:

This invention is a sigma drone chassis that can overcome the disadvantages mentioned above, and its feature is; It is light and cheap due to the aluminum sigma profiles, and it has a durable structure thanks to the strength of the fasteners used in the connection of the sigma profiles. The sigma profiles are made of aluminum material. The chassis is built from sigma profiles. Sigma profiles are connected to each other by corner joints as mentioned in claims.

The product subject to the invention is a drone chassis that can be used to carry heavy loads or to carry people. The parts that make up the chassis are light, flexible, and durable, as well as being cheap and demountable, reducing the assembly cost of the chassis. In addition, it has a compact and modular structure that does not take up much space. The product of the invention is the "H-shaped" drone chassis.

It is easy to install due to the easy fixing of the parts that make up the invention, and the costs are low due to the short assembly time and cheapness of the parts used. Moreover, the invention has a solid construction.

### Description of the Figures:

The invention will be described with reference to the accompanying figures, so that the features of the invention will be more clearly understood and appreciated, but the purpose of this is not to limit the invention to these certain regulations. On the contrary, it is intended to cover all alternatives, changes and equivalences that can be included in the area of the invention defined by the accompanying claims. The details shown should be understood that they are shown only for the purpose of describing the preferred embodiments of the present invention and are presented in order to provide the most convenient and easily understandable description of both the shaping of methods and the rules and conceptual features of the invention. In these drawings.

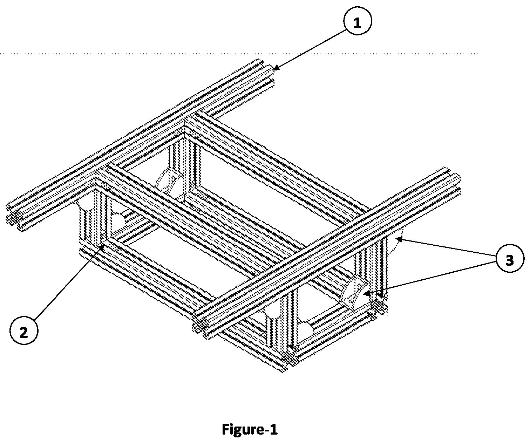

- Figure 1: Perspective view of the system.

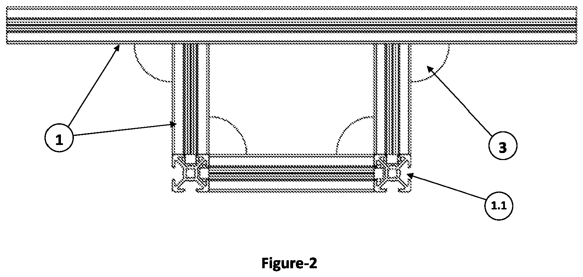

- Figure 2: Front view of the system.

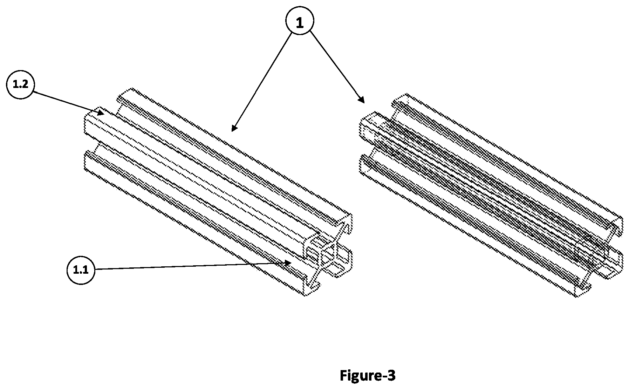

- Figure 3: Sigma profile perspective view of the.

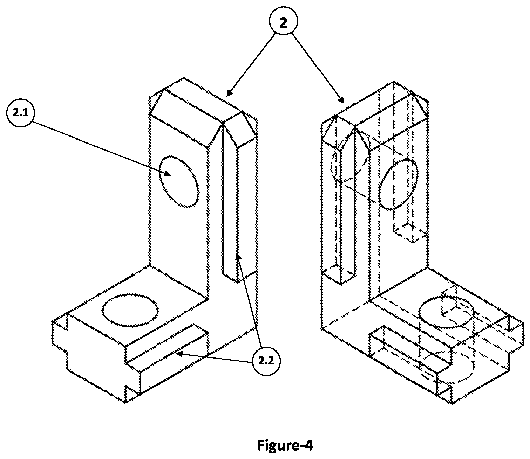

- Figure 4: Perspective view of the hidden corner connection.

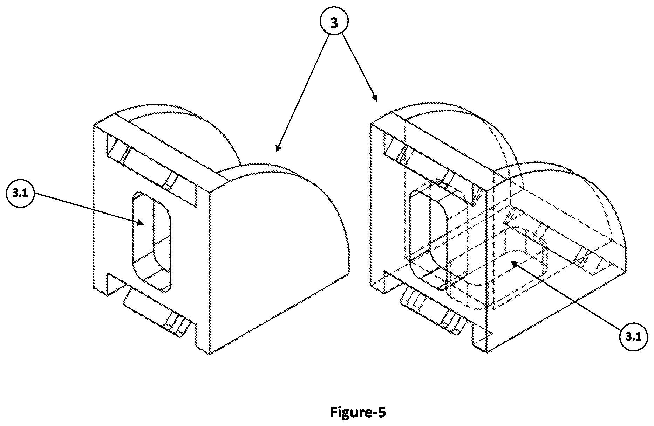

- Figure 5: Perspective view of a wide corner connection.

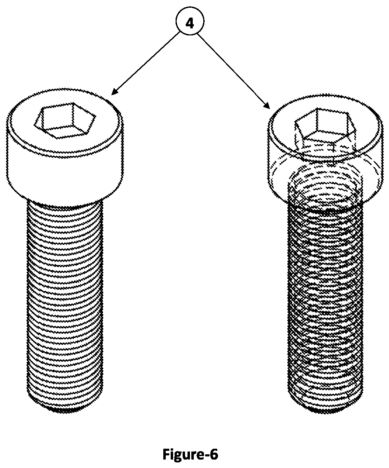

- Figure 6: Perspective view of the bolt.

The figures to help understand the present invention are numbered as indicated in the attached image and are given below along with their names.

### Description of References:

1. Sigma Profile
   1.1.Profile Channel
   1.2.Profile Surface
2. Hidden Coner Joints
   2.1.Hole
   2.2.Ledge
3. Wide Corner Joints
   3.1. Slot
4. Bolt

### Description of the Invention:

The parts constituting the invention are basically; sigma profile (1), hidden corner joint (2), wide corner joint (3) and bolt (4). Sigma profile (1) has sections of profile channel (1.1) and profile surface (1.2). The hidden corner joint (2) has guide holes (2.1) formed on its surfaces. There are ledges (2.2) on their side surfaces. The wide corner joint (3) has an L-shaped slot (3.1).

The invention consists of assembling sigma profiles (1) to each other. Sigma profiles (1) are connected to each other by hidden corner j oint (2) and wide corner joint (3). Special bolts (4) are used during the assembly of the fasteners. The chassis is generally light, flexible, and durable, but also cheap and detachable.

Sigma profiles (1) are the basic part of the chassis of the drone. Sigma profiles (1) are made of aluminum material and there are profile channels (1.1) on which fasteners can be easily mounted.

The hidden corner joint (2) is L-shaped and connects the sigma profiles (1) with a right angle. The hidden corner joint (2) passes into the interior of the profile channels (1.1) and is prevented from coming out of the channels due to the ledges (2.2). It fixes the sigma profiles (1) positioned perpendicular to each other by nesting in the guided holes (2.1) with bolts (4). Hidden corner connection (2) is produced from zamak metal alloy and there is a screw hole (2.1) on both sides for metric bolt (4) to be attached. During the connection process, the hidden corner joints (2) is roughly hidden by being mounted inside the profile channels (1.1) on the sigma profiles (1).

The bolt (4) is used for the connection of the fasteners to the sigma profiles (1). Allen key is compatible and made of steel. It is manufactured to withstand extreme loads.

When the chassis assembly process is completed, it is ready for the placement of the electronic parts, the motor, wing, connection apparatus and the motherboard, processor, battery, etc. are attached to the profile ends. The drone installation process is completed by integrating the devices.

## Claims

1. A sigma drone chassis, comprising:
- sigma profiles (1) made of aluminum, having sections of profile channels (1.1) and profile surfaces (1.2),
- hidden corner joints (2) which are L-shaped configured to connect two separate sigma profiles (1) at right angles,
- -wide corner joints (3) which are L-shaped, configured to connect two separate sigma profiles (1) at right angles,
- bolts (4) to connect hidden corner joints (2) and wide corner joints (3) to the sigma profiles (1),
**characterized in that**:
- ledges (2.2) are provided on each side surface of the hidden corner joints (2) for preventing the joints (2) from coming out of the profile channels (1.1),
- the drone chassis is H-shaped,
- the chassis has profile (1) ends configured to attach a motor and a wing.

2. The sigma drone chassis according to Claim 1, wherein the hidden comer connections (2) are made of zamak metal alloy.

3. The sigma drone chassis according to Claim 2, wherein the corner joints (2) have holes (2.1) drilled into the profile channel (1.1) configured to receive the bolts (4).

4. The sigma drone chassis according to Claim 1, wherein the wide comer joints (3) are made of etial-150 aluminum alloy.

5. The sigma drone chassis according to Claim 1, wherein each wide corner joint (3) has a slot (3.1) configured to attach the wide corner joints (3) to the profile surface (1.2) by means of a bolt (4).

## Patentansprüche

1. Sigma-Drohnenrahmen, umfassend:
- Sigma-Profile (1) aus Aluminium mit Profilkanälen (1.1) und Profilflächen (1.2),
- verdeckte Eckverbinder (2),
die L-förmig ausgebildet sind und dazu eingerichtet sind, zwei separate Sigma-Profile (1) rechtwinklig miteinander zu verbinden,
- breite Eckverbinder (3), die L-förmig ausgebildet sind und dazu eingerichtet sind, zwei separate Sigma-Profile (1) rechtwinklig miteinander zu verbinden,
- Schrauben (4) zum Verbinden der verdeckten Eckverbinder (2) und der breiten Eckverbinder (3) mit den Sigma-Profilen (1),
**dadurch gekennzeichnet, dass**:
- an jeder Seitenfläche der verdeckten Eckverbinder (2) Vorsprünge (2.2) vorgesehen sind, um zu verhindern, dass die Eckverbinder (2) aus den Profilkanälen (1.1) herausgleiten,
- der Drohnenrahmen H-förmig ausgebildet ist,
- der Rahmen Profilenden (1) aufweist, die zur Befestigung eines Motors und eines Flügels ausgebildet sind.

2. Sigma-Drohnenrahmen nach Anspruch 1, **dadurch gekennzeichnet, dass** die verdeckten Eckverbinder (2) aus einer Zamak-Metalllegierung hergestellt sind.

3. Sigma-Drohnenrahmen nach Anspruch 2, **dadurch gekennzeichnet, dass** die Eckverbinder (2) Bohrungen (2.1) aufweisen, die zum Durchführen der Schrauben (4) vorgesehen sind und mit dem Profilkanal (1.1) fluchten.

4. Sigma-Drohnenrahmen nach Anspruch 1, **dadurch gekennzeichnet, dass** die breiten Eckverbinder (3) aus einer Etial-150-Aluminiumlegierung hergestellt sind.

5. Sigma-Drohnenrahmen nach Anspruch 1, **dadurch gekennzeichnet, dass** jeder breite Eckverbinder (3) einen Langschlitz (3.1) aufweist, der dazu eingerichtet ist, den breiten Eckverbinder (3) mittels einer Schraube (4) an der Profilfläche (1.2) zu befestigen.

## Revendications

1. Un châssis de drone en profilés sigma, comprenant :
- des profilés sigma (1) réalisés en aluminium, présentant des sections de rainures de profilé (1.1) et des surfaces de profilé (1.2),
- des équerres de liaison dissimulées (2),
configurées en forme de L pour relier deux profilés sigma (1) distincts à angle droit,
- des équerres de liaison larges (3), configurées en forme de L, destinées à relier deux profilés sigma (1) distincts à angle droit,
- des boulons (4) destinés à fixer les équerres de liaison dissimulées (2) et les équerres de liaison larges (3) aux profilés sigma (1),
**caractérisé en ce que** :
- des saillies (2.2) sont prévues sur chaque surface latérale des équerres de liaison dissimulées (2) afin d'empêcher lesdites équerres (2) de sortir des rainures de profilé (1.1),
- le châssis de drone présente une forme en H,
- le châssis comporte des extrémités des profilés (1) configurées pour recevoir un moteur et une aile.

2. Le châssis de drone en profilés sigma selon la revendication 1, dans lequel les équerres de liaison dissimulées (2) sont réalisées en alliage métallique de zamak.

3. Le châssis de drone en profilés sigma selon la revendication 2, dans lequel les équerres de liaison dissimulées (2) comportent des trous (2.1) percés en regard de la rainure de profilé (1.1), configurés pour recevoir les boulons (4).

4. Le châssis de drone en profilés sigma selon la revendication 1, dans lequel les équerres de liaison larges (3) sont réalisées en alliage d'aluminium Etial-150.

5. Le châssis de drone en profilés sigma selon la revendication 1, dans lequel chaque équerre de liaison large (3) comporte une fente (3.1) configurée pour fixer l'équerre de liaison large (3) à la surface de profilé (1.2) au moyen d'un boulon (4).
